(19) Europäisches Patentamt
European Patent Office
Office européen des brevets

(11) Veröffentlichungsnummer : **0 138 102**
**B1**

(12) # EUROPÄISCHE PATENTSCHRIFT

(45) Veröffentlichungstag der Patentschrift : **13.12.89**

(21) Anmeldenummer : **84111347.5**

(22) Anmeldetag : **24.09.84**

(51) Int. Cl.$^4$ : **C 08 G 18/14**, C 08 J 9/00, C 08 G 18/22, C 08 G 18/32, C 08 G 18/76

(54) **Verfahren zur Herstellung von Urethangruppen aufweisenden Schaumstoffen und nach diesem Verfahren erhältliche Schaumstoffe.**

(30) Priorität : **04.10.83 DE 3336029**

(43) Veröffentlichungstag der Anmeldung : **24.04.85 Patentblatt 85/17**

(45) Bekanntmachung des Hinweises auf die Patenterteilung : **13.12.89 Patentblatt 89/50**

(84) Benannte Vertragsstaaten : **BE DE FR GB IT**

(56) Entgegenhaltungen :
**DE-C- 1 112 285**
**DE-C- 1 694 430**
**FR-A- 1 158 057**
**US-A- 3 041 295**
**US-A- 3 943 075**

(73) Patentinhaber : **BAYER AG**
**D-5090 Leverkusen 1 Bayerwerk (DE)**

(72) Erfinder : **Müller, Hanns Peter, Dr.**
**Im Kerberich 6**
**D-5068 Odenthal (DE)**
Erfinder : **Hettel, Hans, Dr.**
**Hahnenweg 5**
**D-5000 Köln 80 (DE)**
Erfinder : **Wagner, Kuno, Dr.**
**Am Kiesberg 8**
**D-5090 Leverkusen 1 (DE)**
Erfinder : **Vogtel, Peter, Dr.**
**Heymannstrasse 30**
**D-5090 Leverkusen 1 (DE)**

**EP 0 138 102 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von (vorzugsweise hochelastischen) offenzelligen, kalthärtenden, Urethangruppen aufweisenden Schaumstoffen. Weichelastische Polyurethanschaumstoffe haben in breitem Umfang in der Polsterindustrie zur Herstellung von Sitz- und Rückenpolsterungen Einsatz gefunden.

Von weichelastischen Schaumstoffen erwartet man einen hohen Sitzkomfort, der vergleichbar sein soll mit dem von Schaumstoffen aus Naturlatex bzw. dem aus einer Kombination üblicher Polstermaterialien, wie Federkernen, Naturhaaren oder Watte.

Von einem Schaumstoff, der in der Polsterindustrie eingesetzt werden soll, erwartet man ferner, daß seine Festigkeitseigenschaften möglichst hoch sind, um ein Zerreißen bei einer mechanischen Beanspruchung, wie es beispielsweise beim Überziehen mit Textilien erfolgen kann, zu vermeiden, und daß seine Härte bei gegebener Rohdichte ($kg/m^3$) möglichst hoch sein soll. Aus wirtschaftlichen Gründen sind Schaumstoffe mit Rohdichten zwischen 15 und 40 $kg/m^3$ dabei besonders bevorzugt.

Um diese verschiedenen Forderungen zu erfüllen, wurde versucht, inerte Füllstoffe organischer oder anorganischer Art einzusetzen. Zum Stand der Technik gehören dabei die Zugabe fester Zusatzstoffe in eine der zur Verschäumung dienenden Komponenten oder direkt in das Verschäumungsgemisch, beispielsweise indem die Füllstoffe direkt in die Mischkammer einer Verschäumungsmaschine zudosiert werden. Weiterhin wurde auch schon versucht, Polymerisationen in den zur Verschäumung dienenden Polyolen durchzuführen. Bekannt sind z. B. die im Handel befindlichen Dispersionen von Copolymeren aus Styrol und Acrylnitril in Hydroxylgruppen aufweisenden Polyethern.

Bei den Verschäumungsverfahren des Standes der Technik werden in der Regel tertiäre Amine als Katalysatoren angewendet. Diese Katalysatoren besitzen neben einem unangenehmen Geruch die nachteilige Eigenschaft, daß sie die Lackierungen von Polstermöbeln angreifen. Insbesondere werden die häufig verwendeten Nitrolacke von den tertiären Aminen zerstört. Darüber hinaus war es technisch bisher nicht möglich, Gemische aus TDI (Toluylendiisocyanat) und MDI (4,4'- und/oder 2,4'-Diphenylmethandiisocyanat) in Weichschaumblockrezepturen so zu verschäumen, daß hieraus Schaumstoffe mit erhöhter Eindruckhärte resultierten (Vergleichsbeispiel III).

Aufgabe der vorliegenden Erfindung ist, diese Nachteile zu vermeiden und darüber hinaus in technisch einfacher Weise kalthärtende Schaumstoffe zur Verfügung zu stellen, welche in sehr weiten Rohdichtebereichen herstellbar sind und hohe Härtegrade bei vorgegebener Rohdichte aufweisen.

Dieses Ziel kann überraschenderweise erreicht werden, wenn man die Herstellung der Polyurethanschaumstoffe in einem Einstufenverfahren aus Polyolen, Polyisocyanaten, Wasser, Emulgatoren bzw. Stabilisatoren und gegebenenfalls organischen Treibmitteln in Gegenwart der beanspruchten Kombination von Vernetzern, Aktivatoren und einer ein labiles Halogen enthaltender Substanz, durchführt. Die Tatsache, daß gerade diese Kombination zu hochelastischen Schaumstoffen mit den gewünschten höheren Härtegraden führt, ist überraschend und war für den Fachmann nicht vorhersehbar, da aus der Hartschaumchemie bekannt ist, daß diese Art der Katalyse zu Isocyanuratstrukturen und die zusätzliche Verwendung von Vernetzern in der Regel zu spröden Polyurethankunststoffen führt. Es ist daher als äußerst überraschend anzusehen, daß die erfindungsgemäß einzusetzenden Katalysatoren die Urethan- und Harnstoff-Bildung beschleunigen, da gerade die als geeignet bezeichneten Katalysatoren als Polymerisationskatalysatoren für Isocyanate bekannt geworden sind. Bei dem vorliegenden erfindungsgemäßen Verfahren ist es gelungen, Schaumstoffe zu erzeugen, die trotz der erhöhten Härte einem Latexschaum ähnlichen Charakter besitzen und je nach Anwendungszweck völlig geruchfrei hergestellt werden können.

Hierfür ist die Kombination von Vernetzer, Katalysator und einer ein labiles Halogen enthaltenden Substanz notwendig, da anderenfalls der Schaumansatz entweder kollabiert (Vergleichsbeispiel I) oder Schaumstoffe erhalten werden, welche nach Heißluftalterung zerbröseln (Vergleichsbeispiel II).

Wird erfindungsgemäß, aber ohne die spezielle Vernetzerkomponente gearbeitet, so erhält man superweiche Schaumstoffe. Auch deren Herstellung gehört zu der der Erfindung zugrunde liegenden Aufgabe.

Der nächstliegende Stand der Technik wird durch die US-PS 3 943 075 repräsentiert. Bei der Nacharbeitung der Lehre dieser US-PS zeigte sich, daß mit Triethanolamin als Vernetzer bei Einsatz von Toluylendiisocyanat (80 Gew.-% 2,4- und 20 Gew.-% 2,6-Isomeres) als Polyisocyanat keine schrumpffreien Blockschaumstoffe hergestellt werden können, auch nicht, wenn auf einen zusätzlichen Amin- und Zinnkatalysator verzichtet wird.

Nicht schrumpfende Blockschaumstoffe können dagegen erfindungsgemäß, z. B. durch Verwendung von Diethanolamin als Vernetzer, erhalten werden.

Die US-PS 3 041 295 unterscheidet sich u. a. vom Verfahren gemäß Erfindung durch den Einsatz von Polyestern als Polyolkomponente. Es hat sich jedoch gezeigt, daß Polyester erfindungsgemäß nicht geeignet sind, da sie dem Schaumstoff die gewünschte Härte bei gleichzeitig hoher Rückstellelastizität nicht geben. Insofern war es überraschend und damit auch erfinderisch, daß sich die Polyether in dieser Hinsicht völlig anders verhalten. Der Druckschrift ist auch kein Hinweis auf die erfindungswesentlichen Vernetzer zu entnehmen.

In der DE-PS 1 112 285 und der FR-A 1 158 057 wird ohne Zweifel die erfindungswesentliche Kombination aus Katalysator, Halogenverbindung und Vernetzer nicht genannt. Es kommt aber zur Lösung der erfindungsgemäßen Aufgabe auf alle Elemente dieser Kombination an, d. h. der Fachmann konnte hieraus keine Anregung zur Lösung der erfindungsgemäßen Aufgabe entnehmen.

Die Tatsache, daß gerade die erfindungsgemäße Kombination zu hochelastischen Schaumstoffen mit gewünschten hohen Härtegraden führt, was für den Fachmann überraschend und nicht vorhersehbar. Die ein labiles Halogen enthaltenen Substanzen sind zwar als Flammschutzmittel aus der Polyurethanchemie bekanntgeworden, wirken hier aber in einer ganz anderen Weise, so daß es keineswegs nahelag, gerade sie als ein Element in die erfindungsgemäße Kombination aufzunehmen.

Gegenstand der vorliegenden Erfindung ist demnach ein Verfahren zur Herstellung von kalthärtenden, offenzelligen, Urethangruppen aufweisenden Schaumstoffen durch einstufige Umsetzung von mindestens zwei Hydroxylgruppen aufweisenden Polyethern vom Molekulargewicht 400 bis 10 000, die überwiegend (bis zu 90 %, bezogen auf alle vorhandenen OH-Gruppen) primäre OH-Gruppen aufweisen, mit Polyisocyanaten in Gegenwart von Katalysatoren und Wasser und gegebenenfalls in Gegenwart von Vernetzungsmitteln, Emulgatoren, Stabilisatoren, organischen Treibmitteln und weiteren Hilfs- und Zusatzmitteln, wobei man die Umsetzung in Gegenwart von

a) 0,01 bis 0,2, vorzugsweise 0,05 bis 0,15 g, bezogen auf 100 g des Polyethers, einer im wäßrigen Medium alkalisch reagierenden organischen oder anorganischen Verbindung, in der die Gruppierung $R—O]^{\ominus}Me^{\oplus}$ mindestens einmal enthalten ist, wobei $Me^{\oplus}$ ein Alkalimetall, gegebenenfalls in komplexierter Form, oder eine quartäre Ammoniumgruppe bedeutet und R für Wasserstoff, Alkyl-, Cycloalkyl-, Aryl-, oder Aralkyl-Gruppen, die auch Heteroatome enthalten können, sowie für die Gruppierungen R'—CO— oder, R'—CS— steht, wobei R' einen der unter R angegebenen organischen Reste darstellt, und

b) einer ein labiles Halogen enthaltenden Substanz, durchführt, dadurch gekennzeichnet, daß man als Vernetzer

c) 0,05 bis 10 g, vorzugsweise 0,08 bis 7 g, bezogen auf 100 g des Polyethers, einer Verbindung der Formel

$$\begin{array}{c} \quad\;\; H \\ \quad\;\; | \\ HO-A-N-B-OH \end{array}$$

in der A und B gleiche oder verschiedene $C_2$-$C_8$-Alkylen- oder $C_5$-$C_8$-Cycloalkylenreste bedeuten, einsetzt.

Erfindungsgemäß bevorzugt ist, daß als Polyisocyanate Toluylendiisocyanate verwendet werden. Erfindungsgemäß bevorzugt ist auch, daß als Polyisocyanate Gemische von Toluylendiisocyanaten mit Phosgenierungsprodukten von Anilin-Formaldehyd-Kondensaten eingesetzt werden. Als Vernetzer c) wird vorzugsweise Diethanolamin verwendet, während als alkalisch reagierende Verbindungen vorzugsweise Alkalihydroxide verwendet werden. Erfindungsgemäß werden als labile Halogen enthaltende Substanzen vorzugsweise halogenierte aliphatische Phosphorsäureester verwendet, besonders bevorzugt Trichlorethylphosphat.

Die Erfindung betrifft ferner die nach dem erfindungsgemäßen Verfahren erhältlichen Schaumstoffe, vorzugsweise hochelastische Schaumstoffe mit erhöhter Eindruckhärte.

Für die Durchführung des erfindungsgemäßen Verfahrens werden eingesetzt :

1. Als Ausgangskomponenten aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, beispielsweise solche der Formel

$$Q(NCO)_n$$

in der

$n = 2$-$4$, vorzugsweise 2,

und

Q einen aliphatischen Kohlenwasserstoffrest mit 2-18, vorzugsweise 6-10 C-Atomen,
einen cycloaliphatischen Kohlenwasserstoffrest mit 4-15, vorzugsweise 5-10 C-Atomen,
einen aromatischen Kohlenwasserstoffrest mit 6-15, vorzugsweise 6-13 C-Atomen,
oder einen araliphatischen Kohlenwasserstoffrest mit 8-15, vorzugsweise 8-13 C-Atomen,

bedeuten, z. B. Ethylen-diisocyanat, 1,4-Tetramethylen-diisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder

-4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage : Triphenylmethan-4,4',4''-triisocyanat, Polyphenyl-polymethylenpolyisocyanate, wie sie durch Anilin-Formaldehyd-Kondensation und anschließende Phosgenierung erhalten und z. B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z. B. in der DE-Auslegeschrift 1 157 601 (US-Patentschrift 3 277 138) beschriebene werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 250 beschrieben werden, Norbornan-Diisocyanate gemäß US-Patentschrift 3 492 330, Allophanatgruppen aufweisende Polyisocyanate, wie sie z. B. in der GB-Patentschrift 994 890, der BE-Patentschrift 761 626 und der NL-Patentschrift 7 102 524 beschrieben werden, Isocyanuratgruppen aufweisende Polyisocyanate, wie sie z. B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z. B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z. B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z. B. in der US-Patentschrift 3 654 106 beschrieben werden, Estergruppen aufweisende Polyisocyanate, wie sie z. B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß des US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden in der Regel die technisch leicht zugänglichen Polyisocyanate, z. B. das 2,4- und 2,6-Toluylendiisocyanat sowie beliebige Gemische dieser Isomeren (« TDI »), insbesondere Polyphenylpolymethylen-polyisocyanate, wie sie durch Anilin-Formaldehyd-Kondensation und anschließende Phosgenierung hergestellt werden (« rohes MDI ») und Carbodiimidgruppen, Urethangruppen, Allophanatgruppen, Isocyanuratgruppen, Harnstoffgruppen oder Biuretgruppen aufweisende Polyisocyanate (« modifizierte Polyisocyanate »), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

Erfindungsgemäß ganz besonders bevorzugt sind Toluylendiisocyanate oder ihre Gemische mit den Phosgenierungsprodukten von Anilin-Formaldehyd-Kondensaten.

2. Als Ausgangskomponenten ferner Polyether mit mindestens zwei Hydroxylgruppen und einem Molekulargewicht von 400 bis 10 000, insbesondere 2 bis 8 Hydroxylgruppen aufweisende Polyether, speziell solche vom Molekulargewicht 3 000 bis 6 000, die überwiegend (bis zu 90 Gew.-%, bezogen auf alle vorhandenen OH-Gruppen im Polyether) primäre OH-Gruppen aufweisen, gegebenenfalls unter Mitverwendung von Polyestern, Polythioethern, Polyacetalen, Polycarbonaten und Polyesteramiden in untergeordneten Mengen (0,5 bis 50, bevorzugt 1 bis 30 Gew.-%, bezogen auf Polyether).

a) Die erfindungsgemäß in Frage kommenden, mindestens zwei, in der Regel 2 bis 8, vorzugsweise 2 bis 3, Hydroxylgruppen aufweisenden Polyether sind solche der an sich bekannten Art und werden z. B. durch Polymerisation von Epoxiden wie Ethylenoxid, Propylenoxid, Butylenoxid, Styroloxid oder Epichlorhydrin mit sich selbst, z. B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Ethylenglykol, Propylenglykol-(1,3) oder -(1,2), Trimethylolpropan, Glycerin, Sorbit, 4,4'-Dihydroxydiphenylpropan, Anilin, Ethanolamin oder Ethylendiamin hergestellt. Auch Sucrosepolyether, wie sie z. B. in den DE-Auslegeschriften 1 176 358 und 1 064 938 beschrieben werden, sowie auf Formit oder Formose gestartete Polyether (DE-Offenlegungsschriften 2 639 083 bzw. 2 737 951), kommen erfindungsgemäß in Frage.

b) Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z. B. um Polythiomischether, Polythioetherester oder Polythioetheresteramide.

c) Als Polyacetale kommen z. B. die aus Glykolen, wie Diethylenglykol, Triethylenglykol, 4,4'-Dioxethoxydiphenyldimethylmethan, Hexandiol und Formaldehyd herstellbaren Verbindungen in Frage. Auch durch Polymerisation cyclischer Acetale wie z. B. Trioxan (DE-Offenlegungsschrift 1 694 128) lassen sich erfindungsgemäß geeignete Polyacetale herstellen.

d) Als Hydroxylgruppen aufweisende Polycarbonate kommen solche der an sich bekannten Art in

Betracht, die z. B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z. B. Diphenylcarbonat oder Phosgen hergestellt werden können (DE-Auslegeschriften 1 694 080, 1 915 908 und 2 221 751 ; DE-Offenlegungsschrift 2 605 024).

e) Zu den Polyesteramiden und Polyamiden zählen z. B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

f) Die gegebenenfalls in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.

Als Beispiele für solche Carbonsäuren und deren Derivate seien genannt :

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure, Terephthalsäuredimethylester und Terephthalsäure-bis-glykolester. Als mehrwertige Alkohole kommen z. B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-Hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Formit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z. B. ε-Caprolacton oder aus Hydroxycarbonsäuren, z. B. ω-Hydroxycarpronsäure, sind einsetzbar.

Vertreter der genannten erfindungsgemäß zu verwendenden Verbindungen sind z. B. in High Polymers, Vol. XVI, « Polyurethanes, Chemistry and Technology », verfaßt von Saunders-Frisch, Interscience Publishers, New York, London, Band I, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z. B. auf den Seiten 45-71, beschrieben. Selbstverständlich können Mischungen der obengenannten Verbindungen mit mindestens zwei Hydroxylgruppen mit einem Molekulargewicht von 400-10 000 eingesetzt werden.

3. Erfindungsgemäß werden als weitere Ausgangskomponente Vernetzer [Komponente c)] der allgemeinen Formel

```
     H
     |
HO-A-N-B-OH
```

eingesetzt, wobei A und B gleiche oder verschiedene $C_2$-$C_8$-Alkylen- oder $C_5$-$C_8$-Cycloalkylenreste bedeuten.

Als Beispiele für derartige Verbindungen seien genannt ; Diethanolamin, Diisopropanolamin, Dipropanolamin, Dicyclohexanolamin, Dioctanolamin. Bevorzugte Verbindung ist Diethanolamin. Dem Verschäumungsansatz wird der Vernetzer in einer Menge von 0,05 bis 10 g, vorzugsweise 0,08 bis 7 g, bezogen auf 100 g Polyether, zugesetzt.

4. Wasser, das in der Regel in einer Menge von 1,8 bis 4,5 Gew.-Teilen, vorzugsweise 2 bis 4 Gew.-Teilen, bezogen auf 100 Gew.-Teile der Polyether vom Molekulargewicht 400-10 000, eingesetzt wird.

5. Erfindungsgemäß wird als weitere Ausgangskomponente eine im wäßrigen Medium alkalisch reagierende organische oder anorganische Verbindung eingesetzt, in der die Gruppierung $R—O]^{\ominus}Me^{\oplus}$ mindestens einmal enthalten ist, wobei $Me^{\oplus}$ ein Alkalimetall — gegebenenfalls in komplexierter Form — oder eine quartäre Ammoniumgruppe bedeutet und R für Wasserstoff, Alkyl-, (vorzugsweise $C_1$-$C_8$-Alkyl), Aryl-, (vorzugsweise $C_6$-$C_{10}$-Aryl), Aralkyl-, (vorzugsweise $C_7$-$C_{15}$-Aralkyl), Cycloalkyl- (vorzugsweise $C_5$-$C_{10}$-Cycloalkyl) Gruppen, die auch Heteroatome enthalten können, sowie für die Gruppierungen R'—CO— oder, R'—CS—, steht, in denen R' einen der unter R angegebenen organischen Reste darstellt.

Beispiele solcher Katalysatoren sind Alkalialkoholate wie Na-methylat-, -ethylat, -propylat, -isopropylat, -butylat, Natriumpolypropylenglykolate aus linearen oder verzweigten Polypropylenglykolethern und Alkaliphenolate ; Alkalisalze von mono- oder polyfunktionellen Carbonsäuren wie Kaliumbenzoat,

Kaliumacetat, Kaliumoleat und Kaliumsalze polymerisierter Leinölfettsäure; Alkalihydroxide (bevorzugt) wie Kaliumhydroxid Natriumhydroxid.

Besonders bevorzugt sind Kaliumhydroxid und Natriumhydroxid.

Gegebenenfalls können Komplexierungsmittel wie z. B. cycl. Kronenether (1, 4, 7, 10, 13, 16-Hexaoxacyclooctadecan) oder offenkettige Liganden wie z. B. Oktaethylenglykol oder dessen Dimethylether mitverwendet werden.

Als Beispiel für eine quartäre Ammoniumgruppe enthaltende Verbindung sei Methyltri-caprylammoniumhydroxid genannt.

6. Erfindungsgemäß wird als weitere Ausgangskomponente eine ein labiles Halogen enthaltende Substanz eingesetzt, wovon in der Regel Mengen von 1 bis 10 Gew.-Tlen, vorzugsweise 2 bis 4 Gew.-Tlen, bezogen auf 100 Gew.-Tle. der Polyether vom Molekulargewicht 400-10 000, angewendet werden. Bevorzugte Beispiele für derartige an sich bekannte Substanzen sind halogenierte aliphatische Phosphorsäureester wie Tris-trichlorethylphosphat, Tris-tribromethylphosphat, Verbindungen, die als Flammschutzmittel in der Polyurethanchemie bekannt geworden sind.

7. Gegebenenfalls als Hilfs- und Zusatzmittel:

a) Leicht flüchtige organische Substanzen als Treibmittel. Als organische Treibmittel kommen z. B. Aceton, Ethylacetat, halogen-substituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether in Frage. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z. B. auf den Seiten 108 und 109, 453 bis 455 und 507 bis 510 beschrieben.

b) Zusätzliche Katalysatoren der an sich bekannten Art, z. B.

Als Katalysatoren kommen ferner Silaamine mit Kohlenstoff-Silizium-Bindungen, wie sie z. B. in der DE-Patentschrift 1 229 290 (entsprechend der US-Patentschrift 3 620 984) beschrieben sind, in Frage, z. B. 2,2,4-Trimethyl-2-silamorpholin und 1,3-Diethylaminomethyl-tetramethyl-disiloxan.

Auch Hexahydrotriazine können als Katalysatoren eingesetzt werden (DE-Offenlegungschrift 1 769 043).

Die Reaktion zwischen NCO-Gruppen und zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Erfindungsgemäß können auch organische Metallverbindungen, insbesondere organische Zinnverbindungen, als Katalysatoren, verwendet werden.

Als organische Zinnverbindungen kommen neben schwefelhaltigen Verbindungen wie Di-n-octylzinn-mercaptid (DE-Auslegeschrift 1 769 367; US-Patentschrift 3 645 927) vorzugsweise Zinn-(II)-salze von Carbonsäuren wie Zinn-(II)-acetat, Zinn-(II)-octoat, Zinn-(II)-ethylhexoat und Zinn-(II)-laurat und die Zinn-(IV)-Verbindungen, z. B. Dibutylzinnoxid, Dibutylzinnchlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäß gegebenenfalls zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z. B. auf den Seiten 96 bis 102 beschrieben.

Die Katalysatoren werden in der Regel in einer Menge zwischen etwa 0,001 und 10 Gew.-%, bezogen auf die Polyether, eingesetzt.

c) Oberflächenaktive Zusatzstoffe, wie Emulgatoren und Schaumstabilisatoren. Als Emulgatoren kommen z. B. die Natriumsalze von Ricinusöl-sulfonaten oder Salze von Fettsäuren mit Aminen wie ölsaures Diethylamin oder stearinsaures Diethanolamin in Frage.

Als Schaumstabilisatoren kommen vor allem Polyethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z. B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-Offenlegungsschrift 2 558 523.

d) Reaktionsverzögerer, z. B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z. B. Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z. B. auf den Seiten 103 bis 113 beschrieben.

Durchführung des erfindungsgemäßen Verfahrens : Die Reaktionskomponenten werden erfindungsgemäß nach dem an sich bekannten Einstufenverfahren zur Umsetzung gebracht, wobei man sich oft maschineller Einrichtungen bedient, z. B. solcher, die in der US-Patentschrift 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z. B. auf den Seiten 121 bis 205 beschrieben.

Die Verschäumung erfolgt in der Regel bei einer Kennzahl (Index) von 100-250, vorzugsweise 105-180. Dabei ist der ganze Anteil an aktiven H-Atomen im Verschäumungsgemisch berücksichtigt.

Beim maschinellen Verschäumen kann das erfindungsgemäße Katalysator-Vernetzergemisch über eine getrennte Leitung oder in Gegenwart der Polyether dosiert werden.

Die Verfahrensweise bei der Herstellung von Katthärtenden Schaumstoffen ist z. B. aus GB-A-1 162 517 und DE-A-2 153 086 bekannt.

Die nach dem erfindungsgemäßen Verfahren hergestellten Schaumstoffe werden beispielsweise als Polstermaterialien, Matratzen, Verpackungsmaterialien, Folien für Kaschierzwecke und als Isolationsmaterialien verwendet. Die nach dem erfindungsgemäßen Verfahren hergestellten hochelastischen Schaumstoffe eignen sich zur Flammkaschierung mit Folien, Geweben und Gewirken aus natürlichen und synthetischen Materialien. Folien aus diesen Schaumstoffen lassen sich auch durch Hochfrequenz und Ultraschall verschweißen.

Das erfindungsgemäß Verfahren wird durch die folgenden Beispiele näher erläutert.

## Versuch A

Herstellung einer Aktivatorlösung

5,99 g (0,11 Mol) pulverisiertes Kaliumhydroxid werden zusammen mit 28,22 g (0,11 Mol) 18-Krone-6 und 34,2 g Dipropylenglykol unter Stickstoff 1,5 Stunden bei 60 °C gerührt. Nach Abkühlen erhält man eine klare, gelbe mittelviskose 50 %ige Lösung des Aktivators in Dipropylenglykol (OH-Zahl ber. : 418).

## Versuch B

Herstellung einer Aktivator-Vernetzer Lösung

6 g Kaliumhydroxid (0,11 Mol) werden in 100 g Ethanol gelöst. In diese Lösung werden dann 500 g Diethanolamin (4,76 Mol) zudosiert. Anschließend wird das Ethanol im Wasserstrahlvakuum (bis 60 °C) abdestilliert. Man erhält auf diese Weise eine klare, farblose, niedrigviskose Aktivator-Vernetzer-Lösung mit folgenden Kenndaten : Viskosität $\eta_{25\,°C}$ = 569 mPas, OH-Zahl : 1581.

## Versuch C

Herstellung einer Aktivatorlösung

100 g KOH (fest) werden bei Raumtemperatur in einer Mischung aus 1 100 g Ethanol und 1 000 g Dipropylenglykol unter Stickstoff gelöst. Dabei steigt die Temperatur der Mischung auf 35 °C an. Nachdem alles in Lösung gegangen ist wird Wasserstrahlvakuum angelegt und das Ethanol bis 60 °C Sumpftemperatur abdestilliert. Man erhält auf diese Weise eine klare, farblose, niedrigviskose Aktivatorlösung.

## Versuch D

Herstellung eines Aktivators

100,7 g (0,25 Mol) Methyltricaprylammoniumchlorid werden bei Raumtemperatur in 100,7 g Ethanol gelöst. In diese Lösung wird eine vorbereitete Lösung von 14 g (0,25 Mol) KOH gelöst in 100 g Ethanol zugegeben. Die Mischung wird 30 Minuten bei Raumtemperatur gerührt ; dabei entsteht ein farbloser Niederschlag (KCl). Die Aktivatorlösung wird anschließend vom Niederschlag abfiltriert und das Lösemittel im Vakuum abgezogen. Man erhält auf diese Weise einen hellbraunen, mittelviskosen Aktivator (Ausbeute 100 g) folgender Struktur :

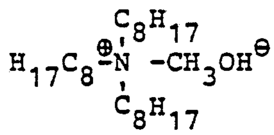

Versuch E

Herstellung eines Aktivators

56,1 g (1 Mol) Kaliumhydroxid werden pulverisiert und zu 444 g (1,2 Mol) Polyethylenglykol (Molekulargewicht 400) zugegeben. Nach 3 Stunden Rühren unter Stickstoff hat sich eine klare, braune Aktivatorlösung gebildet. OH-Zahl : 224. Viskosität $\eta_{25\,°C}$ = 3 040 mPas.

Beispiele 1-5

Tabelle 3 zeigt die erfindungsgemäße Schaumstoffherstellung sowie die Vergleichsbeispiele I bis III. Die Schaumansätze wurden sowohl im Handschaum als Päckchen als auch auf einer UBT-Anlage (handelsübliche Vermischungsmaschine) mit einem Polyolausstoß von 30 kg/min hergestellt. Bei den Maschinenversuchen kamen Katalysatoren gemäß Versuchen A, C, E als auch die Katalysator-Vernetzerlösung gemäß Versuch B zum Einsatz. Die Komponenten wurden ebenfalls getrennt dosiert ; hierbei kam das KOH gelöst in Wasser zum Einsatz. Bei diesen Versuchen zeigte sich, daß die Art der Katalysator-Vernetzer Dosierung die Schaumstoffherstellung nicht beeinflußt.

Bei der Herstellung der Schaumstoffpäckchen werden die Komponenten bis auf das Isocyanat wie in Tabelle 3 angegeben nacheinander im Pappbecher eingewogen und mit einem hochtourigen Rührer gut vermischt. In die Mischung wird dann die angegebene Menge Isocyanat unter Rühren zugegeben, 30 sec. gemischt und in die Papierform ausgegossen. Nach einer Steigzeit von 90 bis 110 sec. haben sich die Schaumstoffe gebildet.

(Siehe Tabellen Seite 9 ff.)

Tabelle 3

| | | Vergleichsbeispiele | | | | | | |
|---|---|---|---|---|---|---|---|---|
| Beispiel | 1 | I | II | 2 | 3 | 4 | 5 | Vergleichsbeispiel III |
| Polyether[1)] | 100 | 100 | 100 | 100 | 100 | 100 | 100 | 100 |
| $H_2O$ | 3,0 | 3,0 | 3,0 | 3,0 | 2,0 | 3,0 | 3,5 | 3,0 |
| Polysiloxanstabilisator (KS 53, BAYER AG) | 0,3 | 0,3 | 0,3 | 0,3 | 0,5 | 0,15 | 0,15 | 0,3 |
| Diethanolamin | 5,0 | 5,0 | 5,0 | 5,0 | 3,0 | 1,0 | 1,0 | 1,0 |
| Glycerin | - | - | - | - | - | 1,0 | 1,5 | - |
| Trichlorethylphosphat | 2,0 | 2,0 | - | 2,0 | 2,0 | 2,0 | 2,0 | - |
| KOH | 0,06 | - | 0,06 | 0,06 | 0,15 | 0,1 | 0,1 | - |
| Aminkatalysator 2) | - | - | - | - | - | 0,3 | 0,5 | 0,2 |
| Aminkatalysator 3) | - | - | - | - | - | - | - | 0,3 |
| Zinnkatalysator 4) | 0,025 | 0,025 | 0,025 | 0,025 | - | - | - | - |
| Trichlormonofluormethan | - | - | - | - | - | - | 10 | - |
| Polyisocyanat 5) | 51,3 | 51,3 | 51,3 | - | - | 27,0 | 28,3 | 25,0 |

Tabelle 3 (Fortsetzung)

| Beispiel | 1 | Vergleichsbeispiele I | II | 2 | 3 | 4 | 5 | Vergleichs beispiel III |
|---|---|---|---|---|---|---|---|---|
| Polyiso-cyanat 6) | - | - | - | 51,3 | 65,1 | - | - | - |
| Polyiso-cyanat 7) | - | - | - | - | - | 27,0 | 28,3 | 25,0 |
| (Index) | 107 | 107 | 107 | 107 | 180 | 110 | 100 | 105 |
| Rohdichte kg/m³ | 34 | | 34 | 37 | 44 | 35 | 24 | 33 |
| Zugfestig-keit KPa | 80 | | 81 | 95 | 100 | 60 | 50 | 80 |
| Bruchdehnung % | 105 | | 105 | 100 | 70 | 90 | 100 | 110 |
| Stauchhärte KPa (bei 40 % Verformung) | 2,3 | | 2,3 | 3,0 | 10,0 | 3,1 | 1,4 | 1,2 |
| Druckverfor-mungsrest % (bei 90 % Verformung) | 3,6 | | 3,2 | 4,5 | 10 | 3,0 | 6,0 | 9.0 |

Bemerkungen :
Vergleichsbeispiel I : ohne KOH : Kollaps
Vergleichsbeispiel II : ohne Trichlorethylphosphat : Schaum nach Heißluftalterung zerbröselt
Vergleichsbeispiel III : schlechte Stauchhärte bei vorgegebener Rohdichte
Beispiel 3 : hoher Index : halbharte Schaumstoffe
Beispiel 4 : hochelastisch

1) ein auf Trimethylolpropan gestartetes aus Propylen- und Ethylenoxid aufgebautes Polyol mit ca. 70 % primären OH-Gruppen und einem mittleren Molekulargewicht von 4 000 und einer OH-Zahl von 35.
2) 1,4-Diazabicyclo [2.2.2] octan, 33 %ig in Dipropylenglykol
3) Bis-(dimethylamino)-ethyl-ether
4) Sn(II)-2-ethyl-hexoat
5) Toluylendiisocyanat (80 Gew.-% 2,4- und 20 Gew.-% 2,6-Isomeres)
6) Toluylendiisocyanat (65 Gew.-% 2,4- und 35 Gew.-% 2,6-Isomeres)
7) Phosgenierungsprodukt eines Anilin-Formaldehyd-Kondensates, NCO-Gehalt 31 %, Viskosität 200 mPa.s

## Patentansprüche

1. Verfahren zur Herstellung von kalthärtenden, offenzelligen, Urethangruppen aufweisenden Schaumstoffen durch einstufige Umsetzung von mindestens zwei Hydroxylgruppen aufweisenden Polyethern vom Molekulargewicht 400 bis 10 000, die überwiegend (bis zu 90 Gew.-%, bezogen auf alle vorhandenen OH-Gruppen) primäre OH-Gruppen aufweisen, mit Polyisocyanaten in Gegenwart von alkalischen Katalysatoren und Wasser und gegebenenfalls in Gegenwart von Vernetzungsmitteln, Emulgatoren, Stabilisatoren, organischen Treibmitteln und weiteren Hilfs- und Zusatzmitteln, wobei man die Umsetzung in Gegenwart von

a) 0,01 bis 0,2, vorzugsweise 0,05 bis 0,15 g, bezogen auf 100 g des Polyethers, einer im wäßrigen Medium alkalisch reagierenden organischen oder anorganischen Verbindung, in der die Gruppierung R—O]$^{\ominus}$Me$^{\oplus}$ mindestens einmal enthalten ist, wobei Me$^{\oplus}$ ein Alkalimetall, gegebenenfalls im komplexierter Form, oder eine quartäre Ammoniumgruppe bedeutet und R für Wasserstoff, Alkyl-, Cycloalkyl-, Aryl- oder Aralkyl-Gruppen, die auch Heteroatome enthalten können, sowie für die Gruppierungen R'—CO— oder R'—CS— steht, wobei R' einen der unter R angegebenen organischen Reste darstellt, und

b) einer ein labiles Halogen enthaltenden Substanz

durchführt, dadurch gekennzeichnet, daß man als Vernetzer

c) 0,05 bis 10 g, vorzugsweise 0,08 bis 7 g, bezogen auf 100 g des Polyethers, einer Verbindung der allgemeinen Formel

H
|
HO-A-N-B-OH

in der A und B gleiche oder verschiedene $C_2$-$C_8$-Alkylen- oder $C_5$-$C_8$-Cycloalkylenreste bedeuten, einsetzt.

2. Verfahren gemäß Anspruch 1, dadurch gekennzeichnet, daß als Polyisocyanate Toluylendiisocyanate verwendet werden.

3. Verfahren nach Anspruch 1, dadurch gekennzeichnet, daß als Polyisocyanate Gemische von Toluylendiisocyanaten mit Phosgenierungsprodukten von Anilin-Formaldehyd-Kondensaten verwendet werden.

4. Verfahren nach Ansprüchen 1-3, dadurch gekennzeichnet, daß als Vernetzer c) Diethanolamin verwendet wird.

5. Verfahren gemäß Ansprüchen 1 bis 4, dadurch gekennzeichnet, daß als alkalisch reagierende Verbindungen a) Alkalihydroxide verwendet werden.

6. Verfahren gemäß Ansprüchen 1 bis 5, dadurch gekennzeichnet, daß als labiles Halogen enthaltende Substanzen b) halogenierte aliphatische Phosphorsäureester verwendet werden.

7. Verfahren nach Ansprüchen 1 bis 6, dadurch gekennzeichnet, daß als halogenierte aliphatische Phosphorsäureester Trichlorethylphosphat verwendet wird.

8. Kalthärtende Schaumstoffe, erhältlich nach den Verfahren gemäß Ansprüchen 1 bis 7.

## Claims

1. A process for the production of cold-cure, open-cell foams containing urethane groups by the single-stage reaction of polyethers containing at least two hydroxyl groups and having a molecular weight in the range from 400 to 10,000, which predominantly contain primary OH groups (up to 90 % by weight, based on all the OH groups present), with polyisocyanates in the presence of alkaline catalysts and water and optionally in the presence of crosslinking agents, emulsifiers, stabilizers, organic blowing agents and other auxiliaries and additives, the reaction being carried out in the presence of

a) 0.01 to 0.2 g and preferably 0.05 to 0.15 g, based on 100 g of the polyether, of an organic or inorganic compound which shows an alkaline reaction in aqueous medium and which contains the group R—O]$^{(-)}$Me$^{(+)}$ at least once, Me$^{(+)}$ being an alkali metal, optionally in complexed form, or a quaternary ammonium group and R being hydrogen, alkyl, cycloalkyl, aryl or aralkyl groups which may even contain heteroatoms and also groups R'—CO— or R'—CS—, where R' is one of the organic radicals defined for R, and

b) a substance containing labile halogen,

characterized in that

c) from 0.05 to 10 g and preferably from 0.08 to 7 g, based on 100 g of the polyether, of a compound corresponding to the following general formula

H
|
HO-A-N-B-OH

in which A and B are the same or different and represent $C_{2-8}$ alkylene or $C_{5-8}$ cycloalkylene radicals, is used as crosslinking agent.

2. A process as claimed in claim 1, characterized in that tolylene diisocyanates are used as the polyisocyanates.

3. A process as claimed in claim 1, characterized in that mixtures of tolylene diisocyanates with phosgenation products of aniline-formaldehyde condensates are used as the polyisocyanates.

4. A process as claimed in claims 1 to 3, characterized in that diethanolamine is used as the crosslinking agent c).

5. A process as claimed in claims 1 to 4, characterized in that alkali hydroxides are used as the alkaline-reacting compounds a).

6. A process as claimed in claims 1 to 5, characterized in that halogenated aliphatic phosphoric acid esters are used as the substances b) containing labile halogen.

7. A process as claimed in claims 1 to 6, characterized in that trichloroethyl phosphate is used as the halogenated aliphatic phosphoric acid ester.

8. Cold-cure foams obtainable by the process claimed in claims 1 to 7.

## Revendications

1. Procédé de fabrication de mousses durcissant à froid, à alvéoles ouvertes, présentant des groupes uréthane, par réaction en une seule phase de polyéthers d'un poids moléculaire de 400 à 10 000 présentant au moins deux groupes hydroxyle, qui présentent essentiellement (jusqu'à 90 % en poids par rapport à tous les groupes OH présents) des groupes OH primaires, avec des polyisocyanates en présence de catalyseurs alcalins et d'eau, et éventuellement en présence d'agents de réticulation, d'émulsifiants, de stabilisateurs, d'agents moussants organiques et d'autres substances auxiliaires ou supplémentaires, la réaction étant exécutée en présence de

a) 0,01 à 0,2 g, de préférence 0,05 à 0,15 g, par rapport à 100 g du polyéther, d'un composé organique ou inorganique réagissant de manière alcaline dans un milieu aqueux, dans lequel le groupe $R—O]^{\ominus}Me^{\oplus}$ est présent au moins une fois, $Me^{\oplus}$ représentant un métal alcalin, éventuellement sous forme complexée, ou un groupe ammonium quaternaire, et R représentant l'hydrogène, des groupes alkyle, cycloalkyle, aryle ou aralkyle qui peuvent également renfermer des hétéroatomes, et représentant aussi les groupes R'—CO— ou R'—CS, R' représentant un des restes indiqués pour R, et

b) une substance contenant un halogène labile,

caractérisé en ce qu'on utilise, comme agent de réticulation

c) 0,05 à 10 g, de préférence 0,08 à 7 g, par rapport à 100 g du polyéther, d'un composé de formule générale

$$HO-A-\overset{\displaystyle H \atop |}{N}-B-OH$$

dans laquelle A et B représentent des restes alkylène en $C_2$-$C_8$ ou cycloalkylène en $C_5$-$C_8$ identiques ou différents.

2. Procédé selon la revendication 1, caractérisé en ce qu'on utilise, comme polyisocyanates, des toluylène-diisocyanates.

3. Procédé selon la revendication 1, caractérisé en ce qu'on utilise, comme polyisocyanates, des mélanges de toluylène-diisocyanates avec des produits de phosgénation de condensats de formaldéhyde et d'aniline.

4. Procédé selon les revendications 1 à 3, caractérisé en ce qu'on utilise, comme agent de réticulation c), la diéthanolamine.

5. Procédé selon les revendications 1 à 4, caractérisé en ce qu'on utilise, comme composés à réaction alcaline a), des hydroxydes alcalins.

6. Procédé selon les revendications 1 à 5, caractérisé en ce qu'on utilise, comme substances contenant un halogène labile b), des esters aliphatiques halogénés d'acide phosphorique.

7. Procédé selon les revendications 1 à 6, caractérisé en ce qu'on utilise, comme ester aliphatique halogéné d'acide phosphorique, le phosphate de trichloréthyle.

8. Mousse durcissant à froid qu'on peut fabriquer suivant les procédés selon les revendications 1 à 7.